# EUROPÄISCHE PATENTSCHRIFT

(11) **EP 1 145 930 B1**
(45) Veröffentlichungstag und Bekanntmachung des Hinweises auf die Patenterteilung: **01.02.2006**
(21) Anmeldenummer: 01104000.3
(22) Anmeldetag: 20.02.2001
(51) Int. Cl.: B62B 1/18, B62B 3/12, B62B 5/06

(54) **Trag- und Fahrgestell einer Schubkarre**
Device for supporting or rolling a wheelbarrow
Dispositif de support ou de roulement pour brouette

(30) Priorität: 11.04.2000 DE 20006657 U
(43) Veröffentlichungstag der Anmeldung: 17.10.2001
(73) Patentinhaber: BTS BauTechnischeSysteme GmbH & Co. KG, 45731 Waltrop (DE)
(72) Erfinder: Sawatzki, Günter, 48249 Dülmen (DE)
(74) Vertreter: Meinke, Dabringhaus und Partner GbR

(56) Entgegenhaltungen:
- DE-U- 8 128 829
- DE-U- 20 008 541
- DE-U- 29 701 857
- US-A- 5 884 920
- PATENT ABSTRACTS OF JAPAN vol. 1998, no. 05, 30. April 1998 (1998-04-30) & JP 10 001056 A (FUKUDA ISAMU), 6. Januar 1998 (1998-01-06)

## Beschreibung

Die Erfindung richtet sich auf ein Trag- und Fahrgestell einer Schubkarre mit einem Laufrad und Handhabungsgriffen am Traggestell mit je einem zusätzlichen Rollrad an jeder Standstütze sowie mit zwei in Längsrichtung der Schubkarre verlaufenden rohrförmigen Gestellelementen mit je einem Handgriff an einem freien Ende. Ein solches Trag- und Fahrgestell zeigt zum Beispiel die US-A-5,884,920.

Ein Problem herkömmlicher Schubkarren besteht u.a. darin, daß sie in beladenem Zustand bestimmungsgemäß von ihren Standbeinen angehoben und über das Laufrad verfahren werden müssen, was je nach Ladegut mit nicht unerheblichem Kraftaufwand einhergeht. Ist beispielsweise die Schütte einer Schubkarre mit feuchtem Sand, Beton, mit einer Reihe von Zementsäcken od. dgl. beladen, muß ein erheblicher Teil dieses Ladegewichtes über die Handhabungsgriffe der Schubkarre vom Benutzer angehoben und bewältigt werden.

In einer Vielzahl der Einsatzfälle ist aber eine Bewegung der Schubkarre wünschenswert, ohne die Last wenigstens teilweise anheben zu müssen. Hierzu sind im Stand der Technik bereits einige Vorschläge gemacht worden, nämlich die Spannstützen mit einem zusätzlichen Laufrad zu versehen. Als Beispiel seien dafür genannt DE-GM 74 16 755, DE-U-81 28 829, DE-U-295 13 473, DE-U-297 01 857, US-A-3 092 418, US-A-4 767 128 sowie JP-Abstracts 100001056A oder 11342846A oder auch DE-37 17 580-A1.

Aufgabe der Erfindung ist die Schaffung einer Lösung, mit der den gewünschten Vorteilen ebenso gerecht werden kann, wie eine einfachere, robustere Gestaltung des Fahrgestelles, eine einfache Herstellung mit einer stabilen, den Anforderungen gerechten Konstruktion.

Mit einem Fahrgestell der eingangs bezeichneten Art wird diese Aufgabe gemäß der Erfindung dadurch gelöst, daß die Gestellelemente zunächst im Bereich der Handgriffe mit einem ersten, horizontal verlaufenden Abschnitt, nachfolgend mit einem senkrecht nach oben geführten zweiten Abschnitt, einem sich anschließenden, zur Fahrgestellmitte verlaufenden, erneut horizontalen dritten Abschnitt, einem sich daran anschließenden, in das Niveau unterhalb der später zu montierenden Kippmulde abgeschrägten weiteren Abschnitt, einem die Kippmulde abstützenden horizontalen fünften Abschnitt und schließlich einem nach schräg unten weisenden sechsten Endabschnitt zur Aufnahme des Laufrades versehen sind.

Durch diese erfindungsgemäße Gestaltung der die wesentlichen Elemente des Fahrgestelles bildenden Teile wird erreicht, daß in einer Biegeeinrichtung mit einfachen Mitteln die Rohre so gestaltet und gebogen werden können, daß sie sowohl die für eine herkömmliche Handhabung notwendigen Griffe der Schubkarre bereitstellen wie auch die das Schieben erleichternde Schubbügel, ohne daß dazu besondere Gestaltungen notwendig wären.

Weitere Merkmale der erfindungsgemäßen Ausgestaltung der Erfindung ergeben sich aus den Unteransprüchen, dabei kann insbesondere vorgesehen sein, daß der sich an den dritten oberen horizontalen Abschnitt anschließende, schräg nach unten verlaufende vierte Abschnitt zunächst zur Verschweißung parallel zu der Schubkarrenmittelachse geführt ist, wobei die sich daran anschließenden Rohrabschnitte schräg nach außen verlaufend geführt sind. Damit läßt sich mit einfachen Mitteln erreichen, daß die beiden Hauptgestellelemente mit den Handgriffen auf der einen Seite und der Laufradaufnahme an der entgegengesetzten Seite in diesem Bereich leicht verschweißen lassen.

Vorteilhaft kann es sein, im Übergangsbereich vom schräg nach unten geführten vierten Abschnitt zum horizontal unterhalb der Kippmulde geführten fünften Abschnitt Auflagestege in Querrichtung zur Mittellängsachse der Schubkarre vorzusehen, wie dies nach einem weiteren Ausgestaltungsmerkmal der Erfindung der Fall ist.

Eine zusätzliche Ausgestaltung kann darin bestehen, daß im Übergangsbereich nach außen weisende Winkelstützen am Fahrgestell angeordnet sind, an deren freien, nach unten weisenden Enden die zusätzlichen Laufräder angeordnet sind.

Die Befestigungswinkel für die zusätzlichen Laufräder können dabei von einem gemeinsamen, an den Längsgestellelementen des Fahrgestelles angeschweißten Rohrbügel gebildet sein.

Schließlich kann auch vorgesehen sein, daß die horizontal geführten fünften Abschnitte unter der Schubkarrenmulde etwa mittig zusammengeführt und dort miteinander verschweißt sind, wodurch erreichbar ist, daß zusätzliche Querverstrebungen entbehrlich sind.

Weitere Merkmale, Einzelheiten und Vorteile der Erfindung ergeben sich aufgrund der nachfolgenden Beschreibung sowie anhand der Zeichnung. Diese zeigt in
- Fig. 1: eine räumliche Unteransicht des Trag- und Fahrgestelles mit Laufrädern und Schubkarrenmulde,
- Fig. 2: eine Variante des Trag- und Fahrgestelles der Schubkarre in räumlicher Darstellung in Aufsicht von oben,
- Fig. 3: ein abgewandeltes Ausführungsbeispiel des Trag- und Fahrgestelles in der Darstellung gemäß Fig. 2,
- Fig. 4: eine Seitenansicht auf das Trag- und Fahrgestell ohne Räder gemäß Pfeil IV in Fig. 2 sowie in
- Fig. 5: eine Seitenansicht auf das Trag- und Fahrgestell mit Pfeil V in Fig. 4.

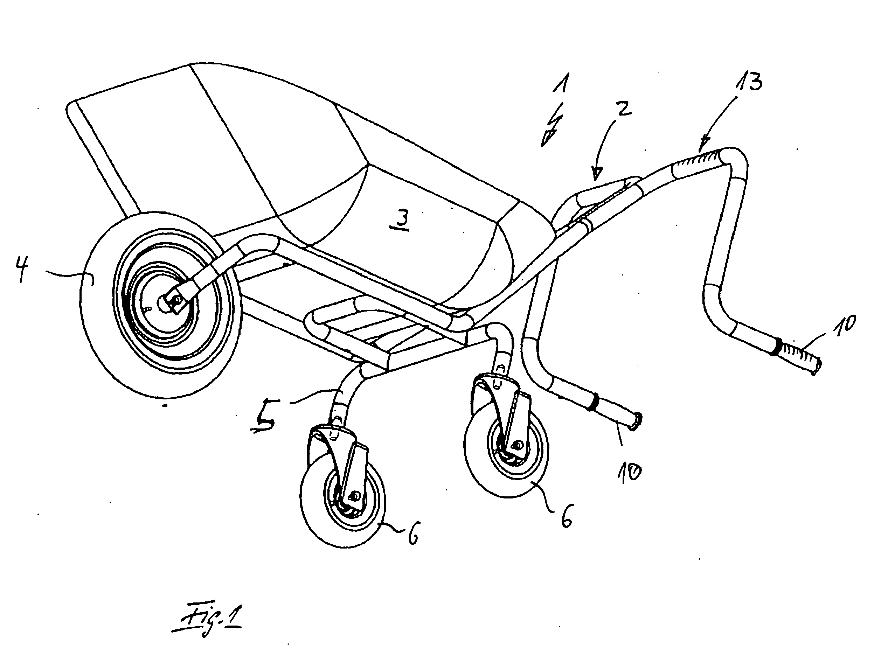

Die allgemein mit 1 bezeichnete, in Fig. 1 in Unteransicht dargestellte Schubkarre weist ein aus Rohren hergestelltes Trag- und Fahrgestell, allgemein mit 2 bezeichnet, auf. Auf dem Trag- und Fahrgestell 2 ist eine Schubkarrenwanne 3 montiert. Das Trag- und Fahrgestell 2 weist ein vorderes Laufrad sowie an einem Ständerbügel 5 zwei weitere lenkbare Laufräder 6 auf.

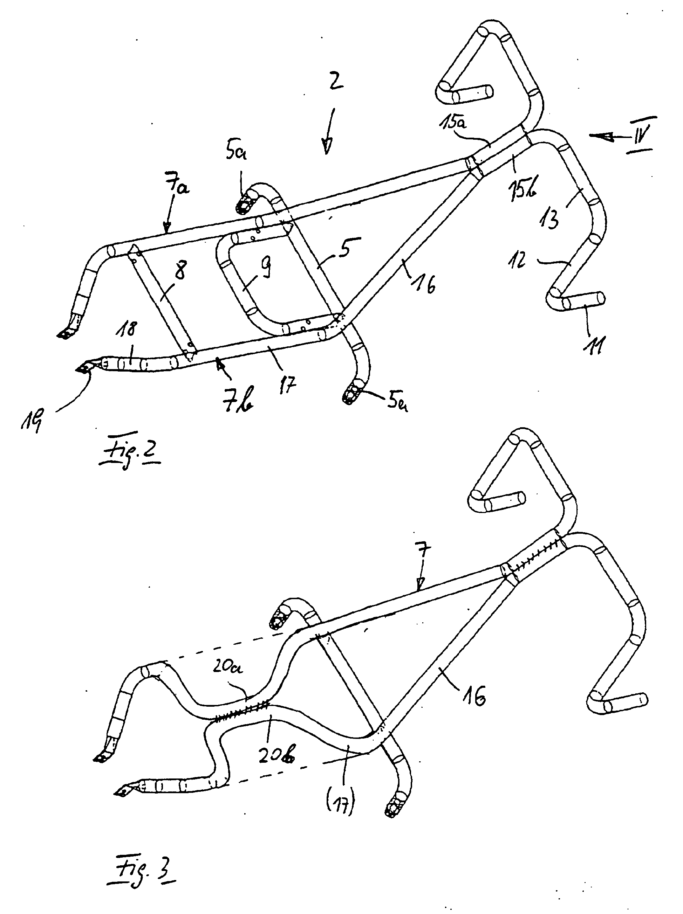

Das insbesondere in den Fig. 2 bis 5 näher dargestellte Trag- und Fahrgestell 2 besteht aus zwei in Längsrichtung der Schubkarre 1 verlaufenden rohrförmigen Gestellelementen, in Fig. 2 mit 7a und 7b bezeichnet, dem diese Gestellelemente quer verbindenden, oben schon erwähnten Ständerbügel 5 sowie im Nachbarbereich des vorderen Laufrades 4 vorgesehenen Querbügeln 8, wobei die in Längsrichtung verlaufenden, rohrförmigen Gestellelemente 7 bereichsweise miteinander und im übrigen mit dem Ständerbügel 5 und dem Querbügel 8 verschweißt sind, wobei im Ausführungsbeispiel nach Fig. 2 ein zusätzlicher, im wesentlichen U-förmig gebogener Verstärkungsbügel 9, der in der Gebrauchslage unterhalb der Schubkarrenmulde 3 positioniert ist, vorgesehen ist.

Die in Längsrichtung der Schubkarre 1 verlaufenden rohrförmigen Gestellelemente 7a und 7b sind einstückig gebogen und weisen ausgehend von den in Fig. 1 mit 10 bezeichneten Handgriffen zunächst einen ersten horizontal verlaufenden Abschnitt 11 koaxial zu den Handgriffen 10 auf, der in einen senkrecht nach oben geführten zweiten Abschnitt 12 übergeht, wobei hier die Angaben "horizontal" bzw. "nach oben", "senkrecht", "im Winkel verlaufend" u. dgl. sich jeweils auf die Ständposition der Schubkarre im Ruhezustand beziehen.

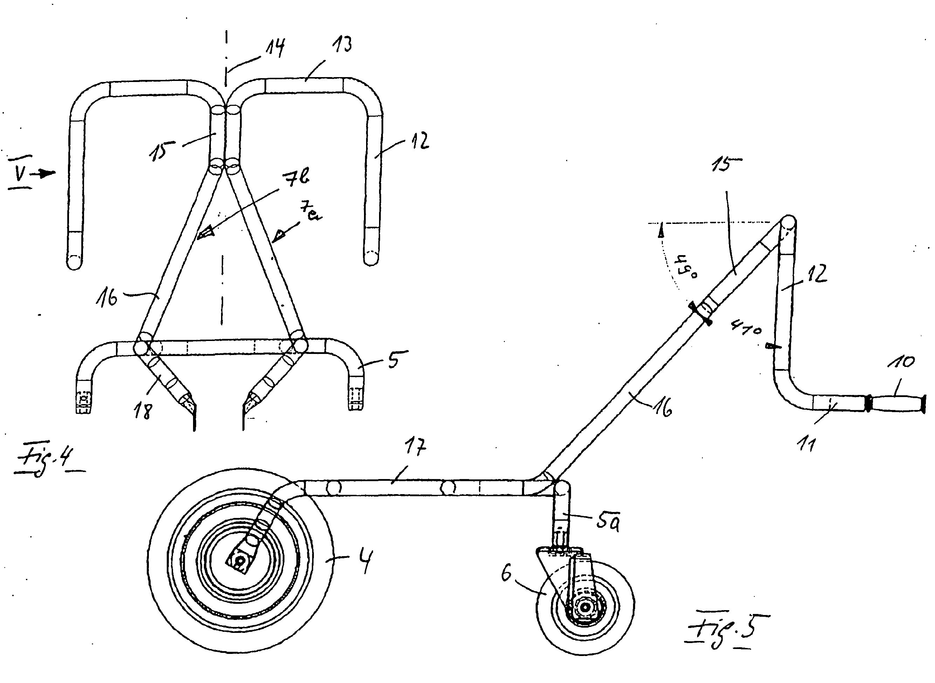

An dem senkrecht nach oben verlaufenden Abschnitt 12 schließt sich ein horizontal verlaufender weiterer Griffabschnitt 13 an, dessen Verlauf in Aufsicht einen rechten Winkel zum Verlauf des Abschnittes 11 bildet. An diesen Abschnitt 13, der etwa bis zur Mittelebene (in Fig. 4 strichpunktiert angedeutet und mit 14 bezeichnet) verläuft, schließt sich ein zu dieser Mittelebene 14 paralleler, kurzer, nach unten geneigter (in Fig. 5 ist dieser Neigungswinkel von der Horizontalen mit 49° angegeben) Abschnitt 15 an, wobei der Abschnitt 15a des Gestellelementes 7a mit dem parallel geführten Abschnitt 15b miteinander verschweißt ist.

Die Abschnitte 15 gehen in einen schräg unter die Mulde 3 verlaufenden und nach außen aufgespreizten Abschnitt 16 über, der wiederum in einen horizontal unter der Mulde 3 geführten Tragabschnitt 17 übergeht, wobei sich dann schließlich ein wiederum in Richtung auf die Mittelebene 14 hin gebogener Endabschnitt 18 anschließt, der die Montagelaschen 19 für das vordere Laufrad 14 aufweist.

Die für die Querversteifung sorgenden Abschnitte 5, 8 bzw. 9 wurden oben schon erwähnt, wobei der Ständerbügel 5 nach unten gekröpfte Endstücke 5a trägt, an denen lenkbare zusätzliche Laufräder 6 positioniert sind, wie sich dies aus Fig. 1 bzw. 5 ergibt.

In Fig. 3 ist ein leicht abgewandeltes Ausführungsbeispiel dargestellt. Hier geht der schräg unterhalb des Niveaus der Tragmulde 3 verlaufende Abschnitt 16 der Gestellelemente 7 in nach innen abgekröpfte Tragbügel 20a bzw. 20b über, die in der Mitte miteinander verschweißt sind, wobei die in Fig. 3 dargestellte Biegeform lediglich ein Beispiel andeutet.

Natürlich ist das beschriebene Ausführungsbeispiel der Erfindung noch in vielfacher Hinsicht abzuändern, ohne den Grundgedanken zu verlassen. Wesentlich ist, daß neben den Handgriffen 10 sich allein durch die Biegeform des Trag- und Fahrgestelles eine zusätzliche Schubmöglichkeit in Griffform ergibt, die vom Abschnitt 13 (Fig. 1) der Gestellelemente 7 bereitgestellt wird.

## Patentansprüche

1. Trag- und Fahrgestell einer Schubkarre mit einem Laufrad und Handhabungsgriffen am Traggestell sowie mit je einem zusätzlichen Rollrad an jeder Standstütze, wobei
die in Längsrichtung der Schubkarre (1) verlaufenden rohrförmigen Gestellelemente (7a,7b) mit je einem Handgriff an einem freien Ende und der Aufnahme für das Schubkarren-Laufrad am anderen freien Ende zunächst im Bereich der Handgriffe (10) mit einem ersten, horizontal verlaufenden Abschnitt (11), nachfolgend mit einem senkrecht nach oben geführten zweiten Abschnitt (12), einem sich anschließenden, zur Fahrgestellmitte verlaufenden, erneut horizontalen dritten Abschnitt (13), einem sich daran anschließenden, in das Niveau unterhalb der später zu montierenden Kippmulde (3) abgeschrägten weiteren vierten Abschnitt (16), einem die Kippmulde abstützenden horizontalen fünften Abschnitt (17) und schließlich einem nach schräg unten weisenden sechsten Endabschnitt (18) zur Aufnahme des Laufrades (4) versehen sind.

2. Trag- und Fahrgestell nach Anspruch 1,
**dadurch gekennzeichnet,**
**daß** der sich an den dritten oberen horizontalen Abschnitt (13) anschließende, schräg nach unten verlaufende vierte Abschnitt (15,16) zunächst zur Verschweißung parallel zu der Schubkarrenmittelachse (14) geführt ist, wobei sich daran anschließend die Rohrabschnitte (16) schräg nach außen verlaufend geführt sind.

3. Trag- und Fahrgestell nach Anspruch 1 oder 2,
**dadurch gekennzeichnet,**
**daß** im Übergangsbereich vom schräg nach unten geführten vierten Abschnitt (16) zum horizontal unterhalb der Kippmulde (3) geführten fünften Abschnitt (17) Auflagestege (5, 8,9) in Querrichtung zur Mittellängsachse der Schubkarre (1) vorgesehen sind.

4. Trag- und Fahrgestell nach Anspruch 3,
**dadurch gekennzeichnet,**
**daß** in diesem Übergangsbereich nach außen weisende Winkelstutzen (5a,5b) am Fahrgestell (2) angeordnet sind, an deren freien, nach unten weisenden Enden die zusätzlichen Laufräder (6) angeordnet sind.

5. Trag- und Fahrgestell nach Anspruch 4,
**dadurch gekennzeichnet,**
**daß** die Winkelstutzen (5a) für die zusätzlichen Laufräder (6) von einem gemeinsamen, an den Längsgestellelementen des Fahrgestelles angeschweißten Rohrbügel (5) gebildet sind.

6. Trag- und Fahrgestell nach einem der vorangehenden Ansprüche,
**dadurch gekennzeichnet,**
**daß** die horizontal geführten fünften Abschnitte (17) unter der Schubkarrenmulde (3) etwa mittig zusammengeführt und dort miteinander verschweißt sind.

## Claims

1. A load-bearing chassis of a wheelbarrow comprising a support wheel and handles on the load-bearing chassis and a respective additional roller wheel on each support leg, wherein the tubular chassis elements (7a, 7b) extending in the longitudinal direction of the wheelbarrow (1) and having a respective handle at one free end and the mounting means for the wheel barrow support wheel at the other free end are firstly provided in the region of the handles (10) with a first horizontally extending portion (11), then with a second portion (12) which is extended perpendicularly upwardly, an adjoining, again horizontal third portion (13) extending towards the centre of the chassis, an adjoining further fourth portion (16) inclined to the level below the tip body (3) which is later to be fitted, a horizontal fifth portion (17) which supports the tip body, and finally an inclinedly downwardly facing sixth end portion (18) for mounting the support wheel (4).

2. A load-bearing chassis according to claim 1 **characterised in that** the inclinedly downwardly extending fourth portion (15, 16) adjoining the third upper horizontal portion (13) is firstly guided parallel to the centre line (14) of the wheelbarrow for welding purposes, the tube portions (16) then being guided in such a way as to extend inclinedly outwardly.

3. A load-bearing chassis according to claim 1 or claim 2 **characterised in that** support bars (5, 8, 9) are provided in the transverse direction relative to the longitudinal centre line of the wheelbarrow (1) in the transitional region from the inclinedly downwardly guided fourth portion (16) to the horizontal fifth portion (17) which extends beneath the tip body (3).

4. A load-bearing chassis according to claim 3 **characterised in that** arranged on the chassis (2) in said transitional region are outwardly facing angle supports (5a, 5b), at the free, downwardly facing ends of which are arranged the additional support wheels (6).

5. A load-bearing chassis according to claim 4 **characterised in that** the angle supports (5a) for the additional support wheels (6) are formed by a common tubular hoop (5) welded to the longitudinal elements of the chassis.

6. A load-bearing chassis according to one of the preceding claims **characterised in that** the horizontally guided fifth portions (17) are brought together approximately centrally under the wheelbarrow body (3) and are there welded together.

## Revendications

1. Châssis porteur et de roulement d'une brouette comportant une roue de déplacement et des poignées sur le dispositif porteur ainsi que respectivement une roue supplémentaire sur chaque montant de support, les éléments de châssis tubulaires (7a,7b) s'étendant dans la direction longitudinale de la brouette (1) étant respectivement équipés d'une poignée sur une extrémité libre du logement pour la roue de déplacement de la brouette sur une autre extrémité d'abord dans la région des poignées (10) d'un premier tronçon (11) s'étendant horizontalement, ensuite d'un deuxième tronçon (12) guidé verticalement vers le haut, à nouveau d'un troisième tronçon horizontal (13) s'étendant au centre du châssis, d'un quatrième autre tronçon (16) raccordé à ce troisième tronçon, biseauté au niveau situé au-dessous du bac basculant (3) à monter ultérieurement, d'un cinquième tronçon (17) horizontal supportant le bac basculant et finalement un sixième tronçon d'extrémité (18) orienté obliquement vers le bas, pour recevoir la roue de déplacement (4).

2. Châssis porteur et de roulement selon la revendication 1,
**caractérisé en ce que**,
le quatrième tronçon (15,16) s'étendant obliquement vers le bas, se raccordant au troisième tronçon horizontal supérieur (13), est d'abord guidé pour le soudage parallèlement à l'axe central de brouette (14), tandis que les tronçons tubulaires (16) se raccordant à celui-ci sont guidés obliquement vers l'extérieur.

3. Châssis porteur et de roulement selon la revendication 1 ou 2,
**caractérisé en ce que**,
dans la zone de transition du quatrième tronçon (16) guidé obliqué vers le bas au cinquième tronçon (17) guidé horizontalement au-dessous du bac basculant (3) sont prévus des éléments d'appui (5,8,9) dans la direction transversale par rapport à l'axe longitudinal central de la brouette (1).

4. Châssis porteur et de roulement selon la revendication 3,
**caractérisé en ce que**,
dans cette région de transition sont agencées des tubulures angulaires (5a,5b) dirigées vers l'extérieur, sur les extrémités libres desquelles dirigées vers le bas sont disposées les roues supplémentaires (6).

5. Châssis porteur et de roulement selon la revendication 4,
**caractérisé en ce que**,
les tubulures angulaires (5a) pour les roues supplémentaires (6) sont constituées par un étrier tubulaire commun (5) soudé sur les éléments de châssis longitudinal du châssis de roulement.

6. Châssis porteur et de roulement selon l'une des revendications précédentes,
**caractérisé en ce que**,
les cinquièmes tronçons guidés horizontalement (17) sont assemblés sous le bac basculant (3) sensiblement centralement et y sont soudés.
